# EUROPÄISCHE PATENTSCHRIFT

(11) **EP 0 644 072 B1**
(45) Veröffentlichungstag und Bekanntmachung des Hinweises auf die Patenterteilung: **19.03.1997**
(21) Anmeldenummer: 94113928.9
(22) Anmeldetag: 06.09.1994
(51) Int. Cl.: B60D 5/00, B61D 17/22, F16G 11/12

(54) **Zwischen zwei gelenkig miteinander verbundenen Fahrzeuggliedern einsetzbarer Faltenbalg**
Bellows for installation between two articulatingly coupled vehicle units
Soufflet pour installation entre deux unités-véhicules accouplées par articulation

(30) Priorität: 06.09.1993 DE 4330042
(43) Veröffentlichungstag der Anmeldung: 22.03.1995
(73) Patentinhaber: HÜBNER Gummi- und Kunststoff GmbH, D-34123 Kassel (DE)
(72) Erfinder: Koch, Robert, D-37242 Bad Sooden-Allendorf (DE)
(74) Vertreter: Walter, Helmut, Dipl.-Ing.

(56) Entgegenhaltungen:
- EP-A- 0 114 913
- DE-A- 3 309 903
- FR-A- 1 313 154
- GB-A- 2 256 247
- US-A- 3 997 945

## Beschreibung

Die vorliegende Erfindung bezieht sich auf einen zwischen zwei gelenkig miteinander verbundenen Fahrzeuggliedern einsetzbaren Faltenbalg gemäß dem Gattungsbegriff des Patensanspruchs 1. Eine solche Anordnung ist in der EP PS 114 913 beschrieben.

Die bekannte Anordnung ist baulich einfach, betriebssicher, ihre Bedienung bereitet keine Probleme.

Wenn sie trotzdem als verbesserungsbedürftig angesehen wurde, so aus folgendem Grund.

Wird der Rinnenrand, über den das Spannkabel beim Ein- und Ausbau des Balges gehoben werden muß, aus Sicherheitsgründen relativ hoch gemacht, so muß der Abstand zwischen den Spannkabelenden in einem großen Bereich veränderbar sein. Die Spannvorrichtung muß einen relativ großen Verstellweg haben, was zu einer aufwendigen Spannvorrichtung und zu relativ langen Verstellzeiten führen kann. Es handelt sich zwar um ein Problem im oberen Komfortbereich, trotzdem sollte es für besondere Anforderungsfälle behoben werden, und das ist Aufgabe der vorliegenden Erfindung.

Die Lösung dieser Aufgabe erfolgt durch die Merkmale im Patentanspruch 1. Vorteilhafte Weiterbildungen der Erfindung sind in den Unteransprüchen genannt.

Die Erfindung ist nach folgend anhand der Zeichnung erläutert. In der Zeichnung zeigen:
Figur 1 eine Gesamtanordnung eines Faltenbalges,
Figur 2 eine Schnittdarstellung einer Einzelheit,
Figur 3 die Erfindung in der Zuordnung zu einer Spannvorrichtung bei einer Gesamtanordnung gemäß Fig. 1 unter Verwendung eines Spannkabels gemäß Figur 2 und in perspektivischer Darstellung.

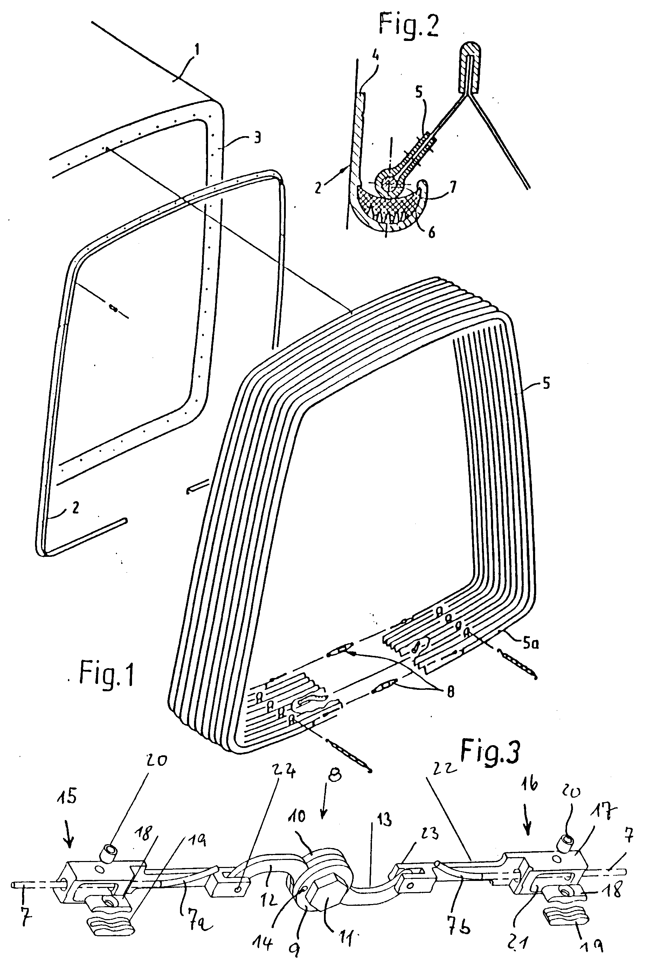

Dem hinteren, offenen Ende eines vorderen Fahrzeuggliedes 1 ist fest ein umlaufender Rahmen 2 zugeordnet, indem er beispielsweise auf die Stirnseite 3 des Fahrzeuggliedes 1 aufgeschraubt ist (Figur 1). Der Rahmen 2 ist rinnenförmig, d.h. er hat den Querschnitt eines U mit ungleich langen Schenkeln (Figur 2), wobei der längere Schenkel 4 dem Anschrauben des Rahmens an der Stirnseite des Fahrzeuggliedes dient. In den Faltenbalg 5 ist an seinem Ende ein Spannkabel 7 eingefügt, beispielsweise eingenäht, welches sich in das rinnenförmige Bett des Rahmens 2 legt. Zur besseren Dichtung ist in das Rahmenbett ein Gummiprofil 6 eingelegt und dort gesichert, und über dieses Gummiprofil stützt sich das Spannkabel 7 (unter Einschaltung der Balgwand) im Rahmenbett ab. Um das Faltenbalgende in dem Rahmen 2 zu halten, liegt das Spannkabel 7 mit Spannung in dem Endtuch des Faltenbalges, um das Faltenbalgende daran zu hindern, ungewollt über den kürzeren Schenkel des U des Rahmens 2 zu gelangen.

Der Erzeugung dieser Spannung dient folgende Spannvorrichtung. Es ist dabei davon ausgegangen, daß der Faltenbalg an seinen beiden Enden gleich ausgestaltet ist, und mit jedem seiner Enden einer Stirnseite der beiden aufeinanderfolgenden Fahrzeugglieder zugeordnet ist.

Die beiden Enden des Spannkabels 7 sind im Bereich der unteren, horizontalen Balgwand 5 einem Kniehebelspanner 8 zugeordnet. Der Kniehebelspanner 8 weist zwei seitliche Scheiben 9, 10 auf, die gemeinsam mit einem Drehknopf 11 um eine zentrale, in Fahrzeuglängsrichtung weisende Achse um einen bestimmten Winkel drehbar sind. An den Enden eines in Fahrzeugquerrichtung weisenden Durchmessers halten die Seitenscheiben 9, 10 zwischen sich je einen Kniehebel 12. 13, von denen je einer schwenkbar auf einem Zapfen 14 gelagert ist, der seinerseits in den beiden Seitenscheiben 9, 10 drehbar gelagert ist, wenn der jeweilige Kniehebel 12 bzw. 13 fest auf dem jeweiligen Zapfen 14 gelagert ist, der seinerseits in den beiden Seitenscheiben 9, 10 fest gelagert ist. Die äußeren Enden der beiden Kniehebel 12, 13 sind den Seilenden 7a, 7b zugeordnet.

Beim Stand der Technik erfolgt diese Zuordnung direkt, indem jedes der Seilenden am äußeren Ende des jeweiligen Kniehebels unmittelbar befestigt ist (Anlenkpunkt 24).

Erfindungsgemäß ist nun zwischen jedem Seilende 7a bzw. 7b und dem Kniehebelspanner 8 ein Seilstrammer 15 bzw. 16 angeordnet.

Jeder Seilstrammer weist ein Gehäuse 17 auf, in dessen äußeres, dem Kniehebelspanner 8, der als Spannschloß wirkt, abgekehrtes Ende das jeweilige Seilende 7a bzw. 7b einführbar und im Einbauzustand eingeführt ist. Zwischen Oberseite und Unterseite des Gehäuses 17 sind zwei Klemmbacken 18, 19 angeordnet, von denen sich der untere Klemmbacken 18 an der Gehäuseunterseite abstützt und der Abstand des oberen Klemmbackens 19 von der Gehäuseoberseite und relativ zum unteren Klemmbacken 18 mittels einer Stellschraube 20 einstellbar ist. Die einander zugekehrten Flächen der Klemmbacken 18, 19 sind wellenförmig ausgebildet, wobei die Wellen in Längsrichtung des Gehäuses und in Querrichtung des Fahrzeuges bzw. der Fahrzeugglieder aufeinanderfolgen und einem Wellenberg des einen Klemmbackens ein Wellental des anderen Klemmbackens gegenüberliegt. Zwischen die Klemmbacken wird, wenn diese so weit wie möglich voneinander beabstandet sind, das jeweilige Kabelende eingeführt, mit der Stellschraube 20 wird der obere Klemmbacken unter Zwischenschaltung des Seilendes dem unteren Klemmbacken so weit genähert, daß auf dieses Seilende eine Klemmwirkung auftritt und dieses in der Position, in die es verbracht wurde, gegenüber dem Gehäuse 17 festgelegt ist.

Jedes Gehäuse 17 kann geschlossen sein oder auch eher ein offener Rahmen, indem zumindest in einer Seitenwand ein relativ großes Fenster 21 vorgesehen ist.

Die einander zugekehrten Enden beider Gehäuse 17 sind nun mit einem Verlängerungsarm 22 versehen und jeder Verlängerungsarm ist an dem dem Spannschloß 8 zugekehrten Ende als Gabel 23 ausgebildet. In die jeweilige Gabel greift einer der beiden Kniehebel 12 bzw. 13 ein und Kniehebel und Gabel sind mit einem Zapfen 23 gelenkig miteinander verbunden.

Die Funktion der Gesamtvorrichtung ist nun folgende:

Zum Einlegen des Spannkabels 7 in die Rinne des Rinnenprofils 2 sind die Scheiben 9, 10 des Spannschlosses 8 so gedreht, daß die Anlenkpunkte der Kniehebel 12, 13 mit den Zapfen 14 an den Enden eines horizontal liegenden Druckmessers sich befinden, das Spannschloß geöffnet ist, die Seilenden insoweit einen maximalen Abstand voneinander haben können. Die Seilenden sind nicht oder nur lose in die Gehäuse 17 eingeführt, die Klemmbacken haben vorzugsweise in beiden Seilstrammern 15, 16 den größten Abstand voneinander. Der Abstand zwischen beiden Seilenden kann so ausreichend bestimmt werden, daß das Seil bequem über den Rinnenrand gehoben werden kann und damit auch der Faltenbalgrand. Daraufhin werden die Seilenden so weit wie möglich in die Gehäuse 17 und zwischen die beiden Klemmbackenpaare eingeführt und die Klemmbacken werden in jedem Gehäuse mittels der Spannschraube soweit einander genähert, daß die Spannkabelenden festgelegt sind. Daraufhin werden die Scheiben 9, 10 gedreht, sodaß die Anlenkpunkte 14 aus der horizontalen Durchmesserebene herausgebracht werden und auf das Spannkabel eine zusätzliche Spannkraft aufgebracht wird.

Das dargestellte Spannschloß ist eine im Zusammenhang mit der Erfindung besonders zweckmäßige Spannschloßausbildung deswegen, weil der Anschluß des Spannseiles unter Zwischenschaltung der Seilstrammer 15, 16 besonders gut möglich ist. Andere Spannschloßausbildungen sind jedoch durchaus möglich.

Bezüglich der Seilstrammer 15, 16 ist entsprechend die Anordnung je eines Seilstrammers auf jeder Seite des Spannschlosses 8 möglich. Es ist jedoch gegebenenfalls nur eines der beiden Spannschlösser 15, 16 ausreichend.

## Patentansprüche

1. Zwischen zwei gelenkig miteinander verbundene Fahrzeugglieder einsetzbare Übergangseinrichtung mit einem Faltenbalg (5) mit einer in Umfangsrichtung des Balges wirkenden Spannvorrichtung zur Festlegung des Balges (5) am einen Ende gegenüber dem zugehörigen Fahrzeugglied (1), wobei das Balgende in einer in der Balgumfangsrichtung verlaufenden Rinne eines rinnenförmigen Rahmenprofiles (4) des Fahrzeuggliedes (1) gehalten ist, in der die Spannvorrichtung liegt und dieses Balgende mit Spannung in der Rinne festlegt, wobei weiter die Spannvorrichtung ein Spannkabel (7) ist, dessen beiden Enden (7a,7b) mittels eines Spannschlosses (8) mit veränderbarem Abstand relativ zueinander gehalten sind, daß bei geöffnetem Spannschloß (8) der Abstand zwischen den beiden Spannkabelenden groß ist und das Spannkabel (7) über die Ränder des rinnenförmigen Rahmenprofils (4) gehoben werden kann, während bei geschlossenem Spannschloß (8) das Spannkabel (7) am Rinnengrund - das Faltenbalgende an diesen anlegend - anliegt und demzufolge nicht über die Rinnenränder hinaus aus der Rinne herausgelangen kann, **dadurch gekennzeichnet**, daß dem eigentlichen Spannschloß (8) ein Seilstrammer (15,16) zugeordnet ist, mit dem vor dem Wirksamwerden des Spannschlosses der ursprüngliche Abstand zwischen den Spannkabelenden (7a,7b) bei geöffnetem Spannschloß (8) bereits um ein vorbestimmtes Maß verringert werden kann und das eigentliche Spannschloß bei der Schließbewegung den gewollten Endabstand zwischen den Spannkabelenden herstellt.

2. Übergangseinrichtung nach Anspruch 1 dadurch gekennzeichnet, daß der Seilstrammer (15, 16) zwei relativ zueinander verstellbare Klemmbacken (18, 19) aufweist, die einen veränderbaren Spalt begrenzen, in den bei maximaler Spaltweite das Spannkabel (7) einführbar ist, das bei geringster Spaltweite von beiden Spannbacken festgehalten ist.

3. Übergangseinrichtung nach Anspruch 2 dadurch gekennzeichnet, daß die mit dem Spannkabel (7) zusammenwirkenden Spannbackenflächen reibungserhöhende Mittel aufweisen.

4. Übergangseinrichtung nach Anspruch 3 dadurch gekennzeichnet, daß die reibungserhöhenden Mittel Querwellen sind.

5. Übergangseinrichtung nach Anspruch 4 dadurch gekennzeichnet, daß die Wellenberge des eilen Spannbackens Wellentälern des anderen Spannbackens zugeordnet sind.

6. Übergangseinrichtung nach einem der Ansprüche 2 bis 5 dadurch gekennzeichnet, daß die Spannbacken in einem Gehäuse (17) angeordnet sind, in das ein die Spannbacken (18, 19) senkrecht zum Spannkabel (7) verstellbares Stellmittel (20) für die Spannbacken einführbar ist.

7. Übergangseinrichtung nach Anspruch 6 dadurch gekennzeichnet, daß das Gehäuse (17) Teil einer Armatur ist, die unmittelbar an ein bewegliches Teil des Spannschlosses anschließbar ist.

8. Übergangseinrichtung nach einem der Ansprüche 1 bis 7 dadurch gekennzeichnet, daß zu beiden Seiten eines Spannschlosses (8) je einer von zwei gleichen Seilstrammern (15, 16) angeordnet ist.

## Claims

1. Transition device which can be inserted between two vehicle members which are connected to each other in an articulated manner, having an expansion bellows (5) with a tensioning device which is effective in the peripheral direction of the bellows to fix the bellows (5) at one end with respect to the associated vehicle member (1), wherein the end of the bellows is held in a channel, extending in the peripheral direction of the bellows, of a channel-shaped frame profile (4) of the vehicle member (1), in which channel the tensioning device lies and fixes this bellows end under tension in the channel, wherein the tensioning device is furthermore a tensioning cable (7) of which the two ends (7a, 7b) are held at a variable distance from each other by means of a turnbuckle (8), that when the turnbuckle (8) is open the distance between the two tensioning cable ends is large and the tensioning cable (7) can be lifted over the edges of the channel-shaped frame profile (4) while when the turnbuckle (8) is closed the tensioning cable (7) lies against the base of the channel - laying the end of the expansion bellows thereon - and consequently cannot pass over the edges of the channel and out of the channel, characterised in that a cable grip (15, 16) is associated with the actual turnbuckle (8), with which grip, before the turnbuckle becomes effective, the original distance between the tensioning cable ends (7a, 7b) when the turnbuckle (8) is open can be reduced by a predetermined amount and the actual turnbuckle etab;ishes the desired final distance between the tensioning cable ends as it closes.

2. Transition device according to claim 1, characterised in that the cable grip (15, 16) comprises two clamping jaws (18, 19) which can be adjusted with respect to each other and which define a variable gap into which the tensioning cable (7) can be introduced, when the gap width is at its maximum, and is held by the two clamping jaws when the gap width is at its minimum.

3. Transition device according to claim 2, characterised in that the clamping jaw surfaces cooperating with the tensioning cable (7) comprise means to increase friction.

4. Transition device according to claim 3, characterised in that the friction-increasing means are transverse corrugations.

5. Transition device according to claim 4, characterised in that the corrugation crests of one clamping jaw are associated with the corrugation troughs of the other clamping jaw.

6. Transition device according to one of claims 2 to 5, characterised in that the clamping jaws are disposed in a housing (17) into which an adjusting means (20) for the clamping jaws can be inserted, which adjusts the clamping jaws (18, 19) perpendicularly with respect to the tensioning cable (7).

7. Transition device according to claim 6, characterised in that the housing (17) is part of a fitting which can be connected directly to a movable part of the turnbuckle.

8. Transition device according to one of claims 1 to 7, characterised in that a respective one of two identical cable grips (15, 16) is disposed on each side of a turnbuckle (8).

## Revendications

1. Dispositif de transition pouvant être monté entre deux éléments de véhicule réliés entre eux de façon articulée, comportant un soufflet (5) avec un dispositif de tension qui agit dans le sens circonférentiel du soufflet, qui est destiné à fixer l'une des extrémités du soufflet (5) par rapport à l'élément de véhicule (1) associé, l'extrémité du soufflet étant maintenue dans une rainure d'un profilé (4) de cadre rainuré de l'élément de véhicule (1), qui s'étend dans le sens circonférentiel du soufflet, dans laquelle est situé le dispositif de tension qui fixe cette extrémité du soufflet par tension dans la rainure, le dispositif de tension étant par ailleurs un câble tendeur (7), dont les deux extrémités (7a, 7b) sont maintenues à un écartement variable l'une par rapport à l'autre au moyen d'un verrou de tension (8), étant précisé que lorsque le verrou de tension (8) est ouvert, l'écartement entre les deux extrémités du câble tendeur est grand et que le câble tendeur (7) peut être soulevé par-dessus les bords du profilé de cadre (4) rainuré, alors que lorsque le verrou de tension (8) est fermé, le câble tendeur (7) est appliqué contre le fond de la rainure - en appliquant l'extrémité du soufflet contre ce fond - et ne peut par conséquent pas sortir de la rainure par-dessus les bords de cette dernière, caractérisé en ce qu'un raidisseur (15, 16) de câble est associé au verrou de tension (8) proprement dit, avec lequel l'écartement initial entre les extrémités (7a, 7b) du câble tendeur peut déjà être réduit d'un degré prédéterminé avant que le verrou de tension (8) n'agisse, et en ce que lors du mouvement de fermeture, le verrou de tension proprement dit établit l'écartement final souhaité entre les extrémités du câble tendeur.

2. Dispositif de transition selon la revendication 1, caractérisé en ce que le raidisseur (15, 16) de câble comporte deux mâchoires de serrage (18, 19) pouvant être déplacées l'une par à l'autre, qui délimitent une fente variable dans laquelle le câble tendeur (7) peut être inséré à l'état d'ouverture maximale de la fente, et dans laquelle il est retenu par les deux mâchoires de serrage à l'état d'ouverture minimale de la fente.

3. Dispositif de transition selon la revendication 2, caractérisé en ce que les surfaces des mâchoires de serrage qui agissent conjointement avec le câble tendeur (7) comportent des moyens augmentant le frottement.

4. Dispositif de transition selon la revendication 3, caractérisé en ce que les moyens augmentant le frottement sont des ondulations transversales.

5. Dispositif de transition selon la revendication 4, caractérisé en ce que les sommets d'ondes de l'une des mâchoires de serrage sont associés aux creux d'ondes de l'autre mâchoire de serrage.

6. Dispositif de transition selon l'une quelconque des revendications 2 à 5, caractérisé en ce que les mâchoires de serrage sont disposées dans un carter (17), dans lequel peut être inséré un moyen de réglage (20) pour les mâchoires de serrage, qui déplace les mâchoires de serrage (18, 19) perpendiculairement au câble tendeur (7).

7. Dispositif de transition selon la revendication 6, caractérisé en ce que le carter (17) est une partie d'une garniture qui peut être raccordée directement à la partie mobile du verrou de tension.

8. Dispositif de transition selon l'une quelconque des revendications 1 à 7, caractérisé en ce qu'un raidisseur de deux raidisseurs (15, 16) identiques de câble est disposé des deux côtés du verrou de tension (8).
